# EUROPEAN PATENT APPLICATION

(11) **EP 4 722 059 A1**
(43) Date of publication of application: **08.04.2026**
(21) Application number: 25201809.8
(22) Date of filing: 12.09.2025
(51) Int. Cl.: B60W 10/18, B60W 30/06, B60W 30/18, B60W 60/00

(54) **DRIVING ASSISTANCE DEVICE**

(30) Priority: 04.10.2024 JP 2024174907
(71) Applicant: AISIN CORPORATION, Aichi 448-8650 (JP)
(72) Inventor: BABA, Kentaro, Kariya, Aichi, 448-8650 (JP); ISHIKAWA, Kota, Kariya, Aichi, 448-8650 (JP)
(74) Representative: TBK

(57) **Abstract**

A driving assistance device (1) includes: a travel trajectory generation unit (10) configured to generate a travel trajectory (44, 45) of a vehicle (2); a travel trajectory correction unit (10) configured to correct the travel trajectory when the travel trajectory needs to be corrected while the vehicle is moving along the travel trajectory; a control pattern selection unit (10) configured to select, when the travel trajectory is corrected, a deceleration control pattern of the vehicle for stopping the vehicle at a next stop position in the corrected travel trajectory from a plurality of patterns, based on a remaining distance from a current position of the vehicle to the next stop position in the corrected travel trajectory and a vehicle speed of the vehicle at a time when the travel trajectory is corrected; and a vehicle control unit (10) configured to perform a deceleration control on the vehicle according to the selected deceleration control pattern. A plurality of the deceleration control patterns include a first deceleration control pattern in which control is performed by switching a jerk limit section in which a deceleration control is performed by fixing a jerk, which is a change rate of deceleration, a constant deceleration section in which deceleration is performed at a constant deceleration, and a position control section in which the vehicle speed is controlled to correspond to the remaining distance from the current position of the vehicle to the next stop position in this order, a second deceleration control pattern in which control is performed by switching the constant deceleration section and the position control section in this order, and a third deceleration control pattern including only the position control section.

## Description

### TECHNICAL FIELD

This disclosure relates to a driving assistance device that assists driving of a vehicle.

### BACKGROUND DISCUSSION

In the related art, there has been proposed a driving assistance device that performs driving assistance by executing a part or all of driving operations of a user on a vehicle side.

Here, in the driving assistance, assistance is performed in which a future travel trajectory of a vehicle is generated in advance and the vehicle travels according to the generated travel trajectory. However, the travel trajectory may change halfway due to, for example, a change in a target arrival point after the start of traveling, an appearance of an obstacle, or the like. In particular, in a situation in which a deceleration control for stopping the vehicle at a stop position is performed, when the travel trajectory changes and a distance to the stop position becomes short, or when a new stop position appears in a travel direction on the travel trajectory, it is necessary to switch a vehicle control to a new deceleration control for stopping the vehicle at the stop position. For example, JP 2021-62754A proposes a technique in which when performing automatic driving to a target parking position, if the target parking position changes and a turning condition is satisfied, a vehicle control is switched to a deceleration control for stopping a vehicle at a newly generated turning position (a stop position) without coming into contact with other vehicles.

According to JP 2021-62754A (paragraphs 0099 to 0102) (Reference 1), when the travel trajectory is corrected, deceleration is performed at a deceleration for gentle braking in a situation in which a remaining distance to the stop position is sufficient, and deceleration is performed at a deceleration for sudden braking when the remaining distance to the stop position is short. However, in any case, the change in the deceleration causes a so-called jerky braking, which may cause a problem of extremely poor riding comfort for the passengers. In particular, when the deceleration is performed at a deceleration for sudden braking, the deceleration rapidly changes, which causes a large problem.

A need thus exists for a driving assistance device that implements a deceleration control for stopping a vehicle smoothly at the next stop position as much as possible even when a travel trajectory is corrected, thereby preventing deterioration of riding comfort of an occupant.

### SUMMARY

According to an aspect of this disclosure, a driving assistance device includes: a travel trajectory generation unit configured to generate a travel trajectory of a vehicle; a travel trajectory correction unit configured to correct the travel trajectory when the travel trajectory needs to be corrected while the vehicle is moving along the travel trajectory; a control pattern selection unit configured to select, when the travel trajectory is corrected, a deceleration control pattern of the vehicle for stopping the vehicle at a next stop position in the corrected travel trajectory from a plurality of patterns, based on a remaining distance from a current position of the vehicle to the next stop position in the corrected travel trajectory and a vehicle speed of the vehicle at the time when the travel trajectory is corrected; and a vehicle control unit configured to perform a deceleration control on the vehicle according to the selected deceleration control pattern. A plurality of the deceleration control patterns include a first deceleration control pattern in which control is performed by switching a jerk limit section in which a deceleration control is performed by fixing a jerk, which is a change rate of deceleration, a constant deceleration section in which deceleration is performed at a constant deceleration, and a position control section in which the vehicle speed is controlled to correspond to the remaining distance from the current position of the vehicle to the next stop position in this order, a second deceleration control pattern in which control is performed by switching the constant deceleration section and the position control section in this order, and a third deceleration control pattern including only the position control section.

The "correction of the travel trajectory" includes, in addition to changing the shape of the travel trajectory, changing a position of a stop location, which is an end point of the travel trajectory, and adding a stop location (for example, a turning location) in the middle of the travel trajectory.

According to the driving assistance device having the above configuration, even when the travel trajectory is corrected, an optimum pattern is selected from a plurality of patterns as a deceleration control pattern of the vehicle for stopping the vehicle at the next stop position in the corrected travel trajectory, and a deceleration control is performed on the vehicle according to the selected deceleration control pattern, and therefore, the vehicle can be stopped at the next stop position as smoothly as possible. As a result, deterioration of the riding comfort of the occupant is prevented.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram illustrating a configuration of a driving assistance device according to the present embodiment;
Fig. 3 is a flowchart of a driving assistance processing program according to the present embodiment;
Fig. 4 is a diagram illustrating an example of a parking trajectory;
Fig. 5 is a diagram illustrating an example when the parking trajectory is corrected;
Fig. 6 is a diagram illustrating deceleration control patterns as selection candidates; and
Fig. 7 is a diagram illustrating a method for selecting the deceleration control pattern.

### DETAILED DESCRIPTION

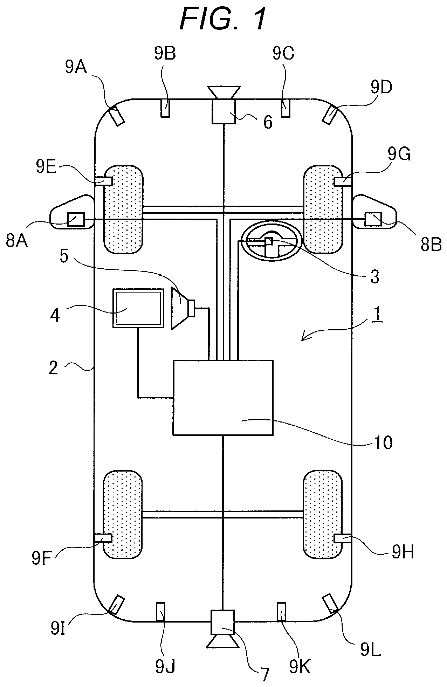

Hereinafter, a driving assistance device according to a specific embodiment disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled vehicle is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

The autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary). In the following description, an autonomous driving section in which the autonomous driving assistance of the vehicle is performed includes a parking lot in addition to all road sections including general roads and highways. The autonomous driving assistance is performed only in a situation in which the user selects to perform the autonomous driving assistance (for example, turns on an autonomous driving start button) and it is determined that traveling by the autonomous driving assistance is possible. In contrast, the vehicle 2 may be a vehicle that can only perform assisted traveling by the autonomous driving assistance. Alternatively, the vehicle 2 may perform the assisted traveling by the autonomous driving assistance only for traveling (that is, parking assistance) to a parking space when the vehicle is parked.

In vehicle control in the autonomous driving assistance according to the present embodiment, for example, a current position of the vehicle, a lane in which the vehicle travels, and positions of surrounding obstacles are detected at any time, and the vehicle control of a steering, a drive source, and a brake is automatically performed such that the vehicle travels along a generated travel trajectory at a speed according to a speed plan generated in the same manner. In particular, as to be described below, when parking assistance is performed, the vehicle control is automatically performed in which the parking space, which is a target into which the vehicle is to be parked, and a surrounding situation are confirmed using a detection result of a sensor or a camera, a parking trajectory to the parking space is calculated, the vehicle enters the parking space along the calculated parking trajectory, and the parking is completed. In addition to the normal parking assistance, the parking assistance also supports long-range parking which involves parking in a distant parking space such as a garage at home or a monthly contracted parking space in a parking lot. In the parking assistance for long-range parking, vehicle control is automatically performed to move the vehicle to a distant, preset parking space and complete parking.

As illustrated in Fig. 1, the vehicle 2 includes an operation unit 3 that receives an operation from the occupant, a liquid crystal display 4 that displays a bird's-eye view image or an overhead image of the surroundings of the vehicle and other information related to driving assistance to the occupant, a speaker 5 that outputs audio guidance related to the driving assistance, a front camera 6, a rear camera 7, and side cameras 8A and 8B that capture images of the surroundings of the vehicle, ultrasonic sensors 9A to 9L that detect obstacles around the vehicle, and a driving assistance electronic control unit (ECU) 10 that performs various types of arithmetic processing based on received information. The driving assistance device 1 includes the driving assistance ECU 10 and other components.

Hereinafter, the components included in the vehicle 2 will be described. First, the operation unit 3 is disposed, for example, on a front surface of a steering wheel and includes operation buttons that are operated when the autonomous driving assistance is started. By operating the operation unit 3, the user can switch between the manual driving traveling in which the vehicle travels based on the driving operation of the user and the assisted traveling by the autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is a type of display device, is provided on an instrument panel of the vehicle 2, and displays a bird's-eye view image or an overhead image of the surroundings of the vehicle generated by performing viewpoint conversion and synthesis processing on captured images captured by cameras including the front camera 6, the rear camera 7, and the side cameras 8A and 8B during the execution of autonomous driving assistance. When there is a warning object, such as a pedestrian, around the vehicle 2, a warning image indicating the presence of the warning object may also be displayed at a position of the warning object in the bird's-eye view image or the overhead image. The liquid crystal display 4 may also be used in a navigation device.

The speaker 5 is provided on the instrument panel of the vehicle 2 and outputs a guidance voice or a warning sound related to the driving assistance. The speaker 5 may also be used in a navigation device.

The front camera 6 is, for example, an imaging device including a camera using a solid-state imaging element such as a CCD and is provided, for example, above a front bumper of the vehicle 2 or on a back side of a rear-view mirror with an optical axis direction thereof being directed to the front in the travel direction of the vehicle.

The rear camera 7 is also an imaging device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also imaging devices each including a camera using a solid-state imaging element such as a CCD and are attached to, for example, left and right side mirrors of the vehicle 2 with optical axis directions thereof being directed to lateral sides of the vehicle.

Then, the driving assistance ECU 10 performs the viewpoint conversion and the synthesis processing on the captured images captured by the cameras including the front camera 6, the rear camera 7, and the side cameras 8A and 8B to generate the bird's-eye view image and the overhead image of the surroundings of the vehicle. During the execution of the autonomous driving assistance, by performing image recognition processing on the captured image, a partition line, a parking frame line, and an obstacle (another vehicle, a pedestrian, a bicycle, a wall, a guard rail, and other structures) around the vehicle are detected, and the autonomous driving assistance is executed based on a detection result thereof. In particular, when parking assistance is performed, the detection result of the parking frame line or the obstacle obtained by the cameras is also used to specify the parking space and to confirm the surrounding situation.

The ultrasonic sensors 9A to 9L are disposed at predetermined intervals on a front portion, a rear portion, and side portions of the vehicle, and transmit ultrasonic waves as probe waves to the surroundings of the vehicle 2 and receive reflected waves of the transmitted probe waves reflected by objects around the vehicle, thereby detecting the objects that reflect the probe waves. Specifically, the ultrasonic sensors 9A to 9L are of a type of distance measurement sensor that can detect a distance (distance measurement value) to the object that reflects the probe wave by measuring a time from the transmission to the reception. The ultrasonic sensors 9A to 9L can generate an output signal (including the distance to the detected object) corresponding to a reception result of the received wave and output the output signal to a control unit. Examples of an object serving as a detection target by the ultrasonic sensors 9A to 9L include an obstacle that needs to be avoided when the vehicle 2 travels, such as a person, a bicycle, another vehicle, and a wall, and an obstacle that forms the parking space. As the distance measurement sensor, a millimeter wave sensor or a laser sensor may be used instead of the ultrasonic sensor.

Installation positions and the installation directions of the respective ultrasonic sensors 9A to 9L can be set appropriately. In the present embodiment, to set a detection range of the object to all orientations including the front, rear, and left and right directions of the traveling direction of the vehicle 2, the ultrasonic sensors 9A to 9D are provided on a front surface of the vehicle 2 being directed to the traveling direction such that a transmission direction of the probe wave is forward in the travel direction of the vehicle. The ultrasonic sensors 9E and 9F are provided on a left side surface of the vehicle 2 being directed to a left direction such that the transmission direction of the probe wave is leftward in the travel direction of the vehicle. The ultrasonic sensors 9G and 9H are provided on a right side surface of the vehicle 2 being directed to a right direction such that the transmission direction of the probe wave is rightward in the travel direction of the vehicle. The ultrasonic sensors 9l to 9L are provided on a rear surface of the vehicle 2 being directed to a direction opposite to the traveling direction such that the transmission direction of the probe wave is toward the rear of the vehicle. The ultrasonic sensors 9A to 9L are at substantially the same height from the ground surface.

In the present embodiment, among the ultrasonic sensors 9A to 9L, in particular, the ultrasonic sensors 9A to 9D on the front surface of the vehicle 2 and the ultrasonic sensors 9l to 9L on the rear surface of the vehicle 2 are provided at positions at which reflected waves can be received as indirect waves between adjacent sensors. Therefore, it is possible to determine not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, a specific position (a relative position with respect to the vehicle) of the object can be specified by triangulation using a measured distance of a previous position, a measured distance of a current position, and a movement distance therebetween as the vehicle moves.

The driving assistance ECU 10 is an electronic control unit that performs various types of processing related to the autonomous driving assistance. For example, the current position of the vehicle, the lane in which the vehicle travels, and the positions of surrounding obstacles are detected at any time, and the vehicle control of a steering, a drive source, and a brake is performed such that the vehicle travels along a generated travel trajectory at a speed according to a speed plan generated in the same manner. In particular, when parking assistance is performed, the vehicle control is performed in which the parking space, which is a target into which the vehicle is to be parked, is specified, and a surrounding situation is confirmed using detection results of the front camera 6, the rear camera 7, the side cameras 8A and 8B, and the ultrasonic sensors 9A to 9L, a parking trajectory to the parking space is calculated, the vehicle enters the parking space along the calculated parking trajectory, and the parking is completed. In contrast, when performing parking assistance for long-range parking, vehicle control is performed in which a parking trajectory including movement to a distant parking space that is registered in advance is calculated, such as a garage at home or a monthly contracted parking space in a parking lot, the vehicle enters the parking space along the calculated parking trajectory, and parking is completed. The liquid crystal display 4 displays the scenery around the vehicle, and when there is a warning object, such as a pedestrian, around the vehicle, the warning image indicating the presence of the warning object is superimposed and displayed on the position of the warning object in the scenery. The driving assistance ECU 10 is connected to the operation unit 3, the liquid crystal display 4, the speaker 5, the front camera 6, the rear camera 7, the side cameras 8A and 8B, and the ultrasonic sensors 9A to 9L described above via an in-vehicle network such as a CAN. The driving assistance ECU 10 is also connected to various sensors such as a vehicle speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components shown in Fig. 1, the vehicle 2 includes basic components as the vehicle 2. However, only a configuration related to control of the autonomous driving assistance and control related to the configuration will be described.

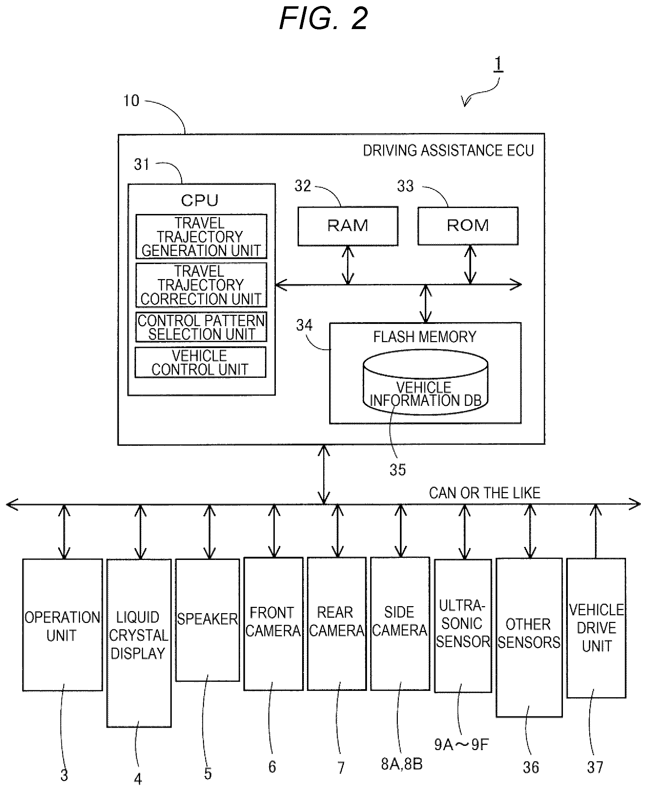

Next, the driving assistance ECU 10 of the driving assistance device 1 included in the vehicle 2 will be described in detail. Fig. 2 is a block diagram illustrating a configuration of the driving assistance device 1 according to the present embodiment.

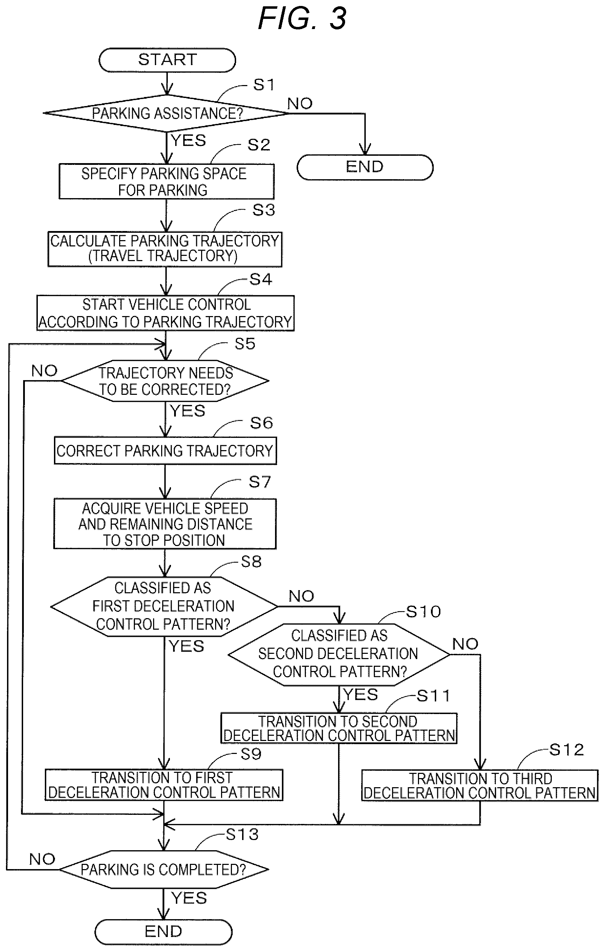

As illustrated in Fig. 2, the driving assistance electronic control unit (ECU) 10 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores travel trajectory data when the travel trajectory is calculated, a ROM 33 in which a driving assistance processing program (see Fig. 3) to be described later is recorded in addition to control programs, and a flash memory 34 that stores a program read from the ROM 33. The driving assistance ECU 10 includes various units as processing algorithms. For example, a travel trajectory generation unit generates the travel trajectory of the vehicle. A travel trajectory correction unit corrects the travel trajectory when the travel trajectory needs to be corrected while the vehicle is moving along the travel trajectory. When the travel trajectory is corrected, a control pattern selection unit selects, from a plurality of patterns, a deceleration control pattern of the vehicle for stopping the vehicle at a next stop position in the corrected travel trajectory, based on a remaining distance from a current position of the vehicle to the next stop position in the corrected travel trajectory and a vehicle speed of the vehicle at the time when the travel trajectory is corrected. A vehicle control unit performs a deceleration control on the vehicle according to the selected deceleration control pattern. That is, the driving assistance ECU 10 is an example of the travel trajectory generation unit, the travel trajectory correction unit, the control pattern selection unit, and a vehicle control unit.

The driving assistance ECU 10 is also connected to various sensors 36 for detecting behaviors of the vehicle, such as a vehicle speed sensor, a wheel speed sensor, an acceleration sensor, a gyro sensor, a steering sensor, and a shift position sensor, and a drive unit 37 of the vehicle, such as a steering wheel, a brake, an accelerator, and a transmission. A current behavior of the vehicle is detected based on detection results of these sensors 36, and the autonomous driving assistance for the vehicle 2 is performed by controlling the drive unit 37. As specific contents of the autonomous driving assistance, for example, a current position of the vehicle, a lane in which the vehicle travels, and positions of surrounding obstacles are detected at any time, and vehicle control of a steering wheel, a drive source, and a brake is performed such that the vehicle travels along a generated travel trajectory at a speed according to a similarly generated speed plan.

The flash memory 34 includes vehicle information DB 35, and the vehicle information DB 35 stores various types of information on the vehicle 2. For example, installation positions (heights from the ground surface and positions in a left-right direction) and detection axes (optical axes with the camera) of the cameras and the ultrasonic sensors 9A to 9L provided in the vehicle 2, a total length, a vehicle width, a wheelbase, a minimum turning radius, and the like are stored. Such pieces of information are input in advance by the occupant or a person on a vehicle manufacturer side.

Next, the driving assistance processing program executed by the driving assistance ECU 10 in the driving assistance device 1 having the above-described configuration will be described with reference to Fig. 3. Fig. 3 is a flowchart of the driving assistance processing program according to the present embodiment. Here, the driving assistance processing program is a program that is executed after an accessory power supply (ACC power supply) of the vehicle 2 is turned on, generates a travel trajectory as a future trajectory along which the vehicle travels, and performs a steering control, a brake control, and the like of the vehicle such that the vehicle automatically travels along the generated travel trajectory. In the following, parking assistance in which the vehicle parks will be specifically described as an example, but this disclosure is not limited to parking assistance and can be applied to autonomous driving assistance during normal traveling. The program illustrated in the flowchart in Fig. 3 is stored in the RAM 32 or the ROM 33 included in the driving assistance device 1 and is executed by the CPU 31.

First, in step (hereinafter abbreviated as S) 1, the CPU 31 determines whether to start parking assistance. In particular, the content of the parking assistance of the present embodiment is to specify a parking space for parking the vehicle and to automatically move the vehicle to the specified parking space.

For example, the parking assistance may be started when the user operates the operation unit 3 to select to start the parking assistance, or the parking assistance may be automatically started when it is detected that the vehicle enters the parking lot, when it is determined that the vehicle arrives at a set destination, or when the vehicle approaches the parking lot.

If it is determined that the parking assistance is started (YES in S1), the processing proceeds to S2. On the other hand, if it is determined that the parking assistance is not started (NO in S1), the driving assistance processing program is ended.

In S2, the CPU 31 specifies a parking space for parking the vehicle. The parking space may be specified by, for example, the user freely designating a desired parking space on a surrounding image of the vehicle displayed on a screen, or by the user registering a parking space for parking (for example, a home garage) in advance to specify the registered parking space as the parking space for parking the vehicle. Alternatively, the ultrasonic sensors 9A to 9L or the cameras may be used to detect a vacant parking space around the host vehicle in real time, and the parking space detected as vacant may be identified as a parking space for parking the vehicle. In the specification of the parking space using the ultrasonic sensors 9A to 9L or the cameras, the parking space can be specified based on a detection result of an obstacle, such as a wall or another vehicle, or the parking space can be specified based on a detection result of a parking partition line drawn on a road surface.

The parking space specified in S2 is a target parking position at which the host vehicle is finally positioned by the parking assistance, that is, an end point of the generated parking trajectory (the travel trajectory). For example, it cannot be said that the detection of the parking space by the cameras is highly accurate, and the parking space may not be accurately detected particularly when the distance to the parking space is long, at night, or in bad weather. In the detection of an obstacle by the ultrasonic sensors, it is difficult to detect a surface in a depth direction when viewed from the host vehicle. Therefore, the parking space specified in S2 may be automatically corrected after the parking assistance is started, and in this case, the parking trajectory is also corrected (S5, S6).

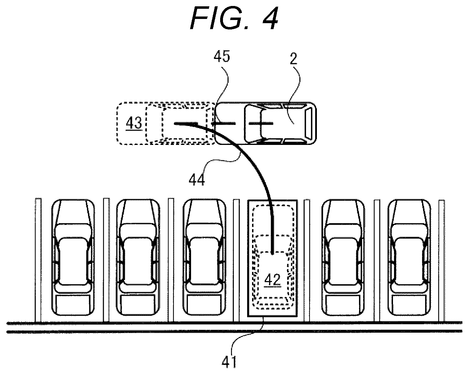

Thereafter, in S3, the CPU 31 calculates the parking trajectory, which is a travel trajectory for parking the host vehicle from the current position of the vehicle to the parking space specified in S2. For example, when the calculation of the parking trajectory in the case of the parallel parking and the reverse parking is described as an example, first, as illustrated in Fig. 4, the CPU 31 sets a target parking position 42 (that is, a position of the host vehicle when the parking is completed) when the host vehicle is parked in a parking space 41 specified in S2. For example, the target parking position 42 is in a center of the parking space 41 and is a position where the vehicle faces forward (backward in the case of forward parking) with respect to an entrance of the parking space. The CPU 31 also sets a reverse start position 43 (that is, a position of the host vehicle at which reversing for parking is started) when the host vehicle is parked in the parking space 41 according to the parking trajectory. The reverse start position 43 is determined with respect to the target parking position 42 in consideration of a length, a width, a minimum turning radius, and the like of the host vehicle.

Subsequently, the CPU 31 calculates a turning trajectory 44 from the reverse start position 43 to the target parking position 42. Specifically, a path is set such that the host vehicle can enter the parking space 41 without coming into contact with the obstacle, and turns at an optimum steering angle derived from a turning characteristic of the vehicle. For example, a travel trajectory turning with the minimum turning radius is calculated as the turning trajectory 44. The turning trajectory 44 may be a circular arc or a clothoid curve, and may include a linear trajectory as a part.

The CPU 31 also calculates a preparation trajectory 45 from the current position of the host vehicle to the reverse start position 43. The preparation trajectory 45 may be a linear trajectory as illustrated in Fig. 4, or may include a circular arc or a clothoid curve depending on a positional relationship between the current position of the host vehicle and the reverse start position 43.

When a turn is required to correct the vehicle heading to an appropriate direction (basically a direction parallel to the parking space), the CPU 31 also calculates the trajectory of the turn.

The turning trajectory 44, the preparation trajectory 45, and the trajectory of the turn included as necessary are parking trajectories (the travel trajectories) for parking the host vehicle from the current position of the vehicle to the parking space specified in S2. The parking trajectories generated in S3 are stored in the flash memory 34 or the like.

Thereafter, in S4, the CPU 31 starts the parking assistance according to the parking trajectories calculated in S3. Specifically, the current position of the host vehicle is detected at any time, and vehicle control of the steering, the drive source, and the brake is automatically performed such that the vehicle travels at a designated speed along the generated parking trajectory. If a turn is required for allowing the vehicle to enter the parking space, shift positions are automatically switched. The parking assistance is basically continuously performed until the parking into the parking space is completed, but may be ended before the parking into the parking space is completed when the user performs a brake operation (an interruption operation of automatic driving) in the case where, for example, an obstacle that cannot be avoided by correcting the trajectory is detected on the parking trajectory.

Subsequently, in S5, the CPU 31 determines whether the current parking trajectory needs to be corrected. Examples of the case where the parking trajectory needs to be corrected include the following cases (A) and (B).
(A) The Parking Space is Corrected
   As described above, it cannot be said that the detection of the parking space by the cameras is highly accurate, and in the detection of the obstacle by the ultrasonic sensors, it is difficult to detect the surface in the depth direction when viewed from the host vehicle. Therefore, the parking space may be corrected after the host vehicle approaches the parking space. In this case, since the end point of the parking trajectory or the orientation of the host vehicle at the end point is changed, the parking trajectory is also corrected. The trajectory of a turn may be added.
(B) An obstacle is Detected

During the parking assistance, in addition to the vehicle control in S4, detection of an obstacle around the host vehicle by the cameras or the ultrasonic sensors 9A to 9L is also performed in parallel. Then, when it is determined that an obstacle is detected around the host vehicle (particularly, between the host vehicle and the parking space for parking) by the cameras or the ultrasonic sensors 9A to 9L, the parking trajectory is corrected to avoid the obstacle. In addition to moving objects, such as a pedestrian or a bicycle, there are stationary objects, such as a wall, that is in a blind spot and cannot be detected at the start of parking assistance as the obstacle. A case where a door of another vehicle located on a side of the parking trajectory or the parking space is opened may be considered. When an obstacle is detected, if the vehicle can reach the parking space while avoiding the obstacle by correcting the parking trajectory, the end point of the parking trajectory, that is, the stop position does not change even when a shape of the parking trajectory changes. However, for example, when an obstacle that cannot be avoided by correcting the trajectory is detected on the parking trajectory, the end point of the parking trajectory may be corrected to a front side of the parking space to stop the host vehicle in front of the obstacle.

If it is determined that the current parking trajectory needs to be corrected (YES in S5), the processing proceeds to S6. On the other hand, when it is determined that the current parking trajectory does not need to be corrected (NO in S5), the processing proceeds to S13 without correcting the current parking trajectory.

In S6, the CPU 31 corrects the current parking trajectory.

For example, in the above case (A), a parking trajectory for parking the host vehicle from the current position of the vehicle, that is, the vehicle position at the time when the parking trajectory is corrected to the corrected parking space is calculated, and the calculated parking trajectory is set as a new parking trajectory. Since a method for calculating the parking trajectory is the same as that in S3, the description thereof will be omitted.

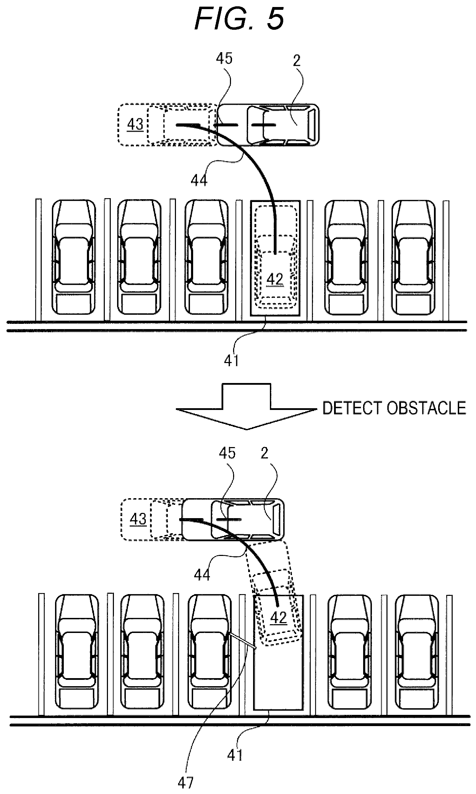

In contrast, in the above case (B), a parking trajectory for parking the host vehicle in the parking space while avoiding the obstacle detected from the current position of the vehicle, that is, the vehicle position at the time when the parking trajectory is corrected is calculated, and the calculated parking trajectory is set as a new parking trajectory. For example, when an obstacle that cannot be avoided by correcting the trajectory is detected on the parking trajectory, the end point of the parking trajectory is corrected to the front side of the parking space to stop the host vehicle in front of the obstacle. That is, a part of the parking trajectory is deleted. For example, Fig. 5 illustrates a case where it is detected that a door 47 of another vehicle located on the side of the parking space 41 is opened during the parking assistance, and since the door 47 cannot be avoided by correcting the trajectory, the end point of the parking trajectory is corrected to the front side of the parking space to stop the host vehicle in front of the door 47. That is, a part of the parking trajectory is deleted.

The corrected parking trajectory may be shorter or longer than the parking trajectory before the correction. The processing in and after S5 is repeated until parking is completed.

When a warning object, such as a pedestrian, is detected around the host vehicle, a warning to the warning object using the liquid crystal display 4 or the speaker 5 is issued in parallel in addition to the correction of the parking trajectory. For example, a warning image indicating the presence of the warning object is displayed at the position of the warning object in the overhead image or the bird's-eye view image around the vehicle displayed on the liquid crystal display 4.

Thereafter, in S7, the CPU 31 acquires a current vehicle speed, that is, a vehicle speed at the time when the parking trajectory is corrected, from the vehicle speed sensor included in the vehicle 2. The CPU 31 acquires a remaining distance from the current position of the vehicle, that is, the vehicle position at the time when the parking trajectory is corrected to the next stop position along the parking trajectory corrected in S6. In addition to the end point of the parking trajectory, the stop position also corresponds to the reverse start position 43 at which the forward movement is switched to the reversing movement (or vice versa, the reversing movement is switched to the forward movement) as illustrated in Fig. 5, or a point at which turning is performed.

Thereafter, in S8 and subsequent steps, the CPU 31 determines how much margin is available in the deceleration control to the next stop position based on the vehicle speed of the host vehicle at the time when the parking trajectory is corrected (hereinafter referred to as a trajectory correction vehicle speed) acquired in S7 and the remaining distance from the vehicle position at the time when the parking trajectory is corrected to the next stop position (hereinafter referred to as a trajectory correction remaining distance). Then, based on a determination result, the deceleration control pattern of the vehicle for stopping the vehicle at the next stop position in the corrected parking trajectory is selected from the plurality of patterns.

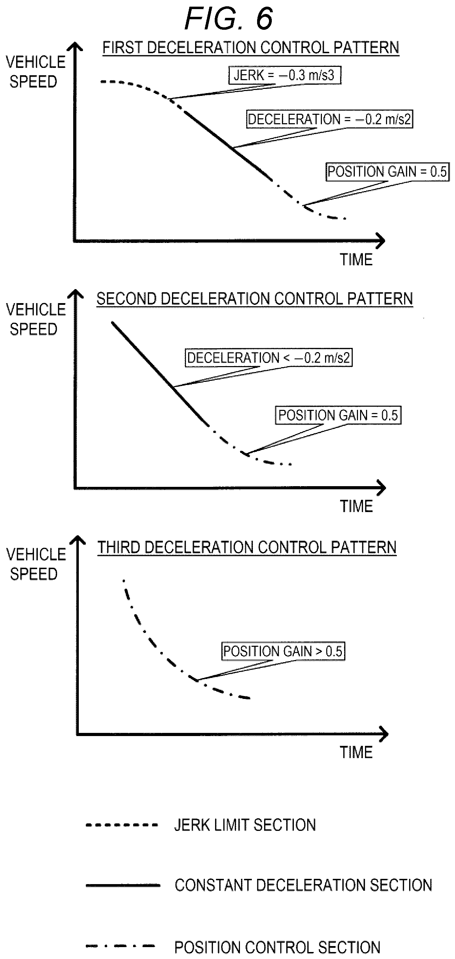

Here, in the present embodiment, there are the following three deceleration control patterns to be selected. Fig. 6 is a graph illustrating an example of a change in the vehicle speed with respect to a time axis which is a horizontal axis for each deceleration control pattern.
(1) A first deceleration control pattern is a pattern in which control is performed by switching in order a "jerk limit section" in which the deceleration control is performed by fixing a jerk, which is a change rate of deceleration, a "constant deceleration section" in which deceleration is performed at a constant deceleration, and a "position control section" in which the vehicle speed is controlled to corresponding to the remaining distance from the current position of the vehicle to the next stop position.
(2) A second deceleration control pattern is a pattern in which control is performed by switching in order the "constant deceleration section" and the "position control section".
(3) A third deceleration control pattern is a pattern including only the "position control section".

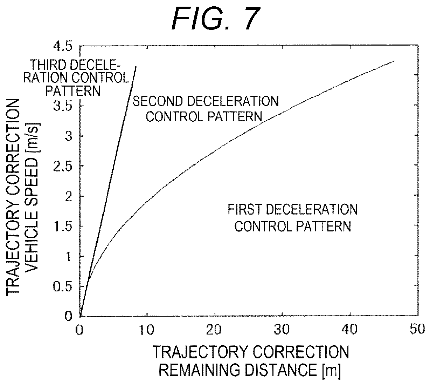

The selection of the deceleration control pattern is performed based on a combination of the trajectory correction vehicle speed and the trajectory correction remaining distance. For example, Fig. 7 is a diagram illustrating a correspondence relationship between the combination of the trajectory correction vehicle speed and the trajectory correction remaining distance and the deceleration control pattern selected for the combination. As illustrated in Fig. 7, the first deceleration control pattern is selected in a state in which it is determined that the deceleration control to the next stop position has the largest margin, that is, in a state in which the trajectory correction vehicle speed is sufficiently small with respect to the trajectory correction remaining distance. The second deceleration control pattern is selected in a state in which it is determined that there is ample margin for the deceleration control to the next stop position, although it cannot be said that there is a sufficient margin. In contrast, the third deceleration control pattern is selected in a state in which it is determined that there is no margin for the deceleration control to the next stop position, that is, in a state in which the trajectory correction vehicle speed is large with respect to the trajectory correction remaining distance.

When the combination of the trajectory correction vehicle speed and the trajectory correction remaining distance is classified into the first deceleration control pattern (YES in S8), the first deceleration control pattern is selected as the deceleration control pattern of the vehicle for stopping the vehicle at the next stop position in the corrected parking trajectory, and then the deceleration control is performed on the vehicle according to the selected first deceleration control pattern (S9). Specifically, the current position of the host vehicle is detected at any time, and the vehicle control for changing the vehicle speed according to the first deceleration control pattern illustrated in Fig. 6 is automatically performed along the corrected parking trajectory. Thereafter, the processing proceeds to S13.

When the combination of the trajectory correction vehicle speed and the trajectory correction remaining distance is classified as the second deceleration control pattern (NO in S8, YES in S10), the second deceleration control pattern is selected as the deceleration control pattern of the vehicle for stopping the vehicle at the next stop position in the corrected parking trajectory, and then the deceleration control is performed on the vehicle according to the selected second deceleration control pattern (S11). Specifically, the current position of the host vehicle is detected at any time, and the vehicle control for changing the vehicle speed according to the second deceleration control pattern illustrated in Fig. 6 is automatically performed along the corrected parking trajectory. Thereafter, the processing proceeds to S13.

When the combination of the trajectory correction vehicle speed and the trajectory correction remaining distance is classified as the third deceleration control pattern (NO in S8, NO in S10), the third deceleration control pattern is selected as the deceleration control pattern of the vehicle for stopping the vehicle at the next stop position in the corrected parking trajectory, and then the deceleration control is performed on the vehicle according to the selected third deceleration control pattern (S12). Specifically, the current position of the host vehicle is detected at any time, and the vehicle control for changing the vehicle speed according to the third deceleration control pattern illustrated in Fig. 6 is automatically performed along the corrected parking trajectory. Thereafter, the processing proceeds to S13.

Here, in each of deceleration control patterns (1) to (3), different parameters are adopted for at least one of a jerk, a maximum deceleration, and a position gain used when the deceleration control is performed for each pattern. Details will be described below.

First, when describing "(1) first deceleration control pattern", the first deceleration control pattern includes three sections of the "jerk limit section", the "constant deceleration section", and the "position control section" as illustrated in Fig. 6. Although the jerk is fixed in the "jerk limit section", a range that can be adopted is set for the jerk values adopted in the "jerk limit section". For example, the largest change rate that can be adopted is set to -0.3 m/s³ (negative indicates deceleration, and the larger the absolute value is, the larger the change rate is), and in the example illustrated in Fig. 6, -0.3 m/s³ is adopted as the jerk value in the "jerk limit section". In the first deceleration control pattern, the jerk value is set not to exceed -0.3 m/s³ also in the "constant deceleration section" and the "position control section". That is, in the deceleration control by the first deceleration control pattern, the change rate of the deceleration is controlled in a range of 0 to -0.3 m/s³, and the change rate of the deceleration is prevented from exceeding -0.3 m/s³. As a result, extremely smooth deceleration control can be performed at the start of the deceleration control, during the control, and during the stop of the vehicle without causing a so-called jerky braking.

In the "(2) second deceleration control pattern" and the "(3) third deceleration control pattern", since there is no distance margin to the stop position, the range limitation for the jerk as described above is not provided. Therefore, the change rate of the deceleration may exceed -0.3 m/s³ (for example, -0.4 m/s³ or -0.5 m/s³). However, since the vehicle speed is controlled to correspond to the remaining distance from the current position of the vehicle to the next stop position in the "position control section" immediately before the stop, it is possible to minimize the jerk value at least just before the stop.

In the "(1) first deceleration control pattern", a range that can be adopted is set for the value of the deceleration in addition to the value of the jerk adopted in each section. For example, the largest deceleration that can be adopted is set to -0.2 m/s² (negative indicates deceleration, and the larger the absolute value is, the larger the deceleration is), and in the example illustrated in Fig. 6, - 0.2 m/s² is adopted as the deceleration in the "constant deceleration section". In the first deceleration control pattern, the deceleration is set not to exceed -0.2 m/s² also in the "jerk limit section" and the "position control section". That is, in the deceleration control by the first deceleration control pattern, the deceleration is controlled in a range of 0 to -0.2 m/s², and the deceleration is prevented from exceeding -0.2 m/s². As a result, a deceleration G generated during deceleration can be reduced, and the burden on the occupant can be reduced.

In the "(2) second deceleration control pattern" and the "(3) third deceleration control pattern", since there is no distance margin to the stop position, the range limitation for the deceleration as described above is not provided. Therefore, the deceleration may exceed -0.2 m/s² (for example, -0.3 m/s² or -0.4 m/s²).

In the "(1) first deceleration control pattern", a range that can be adopted is set for the value of the position gain, in addition to the value of the jerk adopted in each section and the value of the deceleration. Here, the position gain indicates a difference between the target position and the current position, that is, a strength of reflecting the remaining distance to the next stop position in the vehicle control. For example, in the present embodiment, the deceleration is performed such that a value obtained by multiplying the remaining distance [m] from the current position of the vehicle to the next stop position by a coefficient less than 1 is the (target) vehicle speed [m/s] in the "position control section". The coefficient is an example of the position gain. In the "(1) first deceleration control pattern", 0.5 is set as the position gain. The larger the position gain is, the larger the speed change near the stop position is, and therefore, the impact during stopping is larger. In the deceleration control by the first deceleration control pattern, the impact at the time of stopping can be reduced by setting the position gain to 0.5, which is relatively small.

Similarly to the first deceleration control pattern, a range that can be adopted is set for the value of the position gain adopted in the "(2) second deceleration control pattern". In the "(2) second deceleration control pattern", the position gain is similarly set to 0.5. That is, in the deceleration control by the second deceleration control pattern, the jerk value and the deceleration are not limited because there is no margin in the remaining distance, but it is possible to reduce at least the impact when the vehicle is stopped by limiting the position gain.

In contrast, in the "(3) third deceleration control pattern", since there is no distance margin to the stop position, priority is given to stopping at the stop position, and the above-described limit on the position gain is not provided. That is, a value larger than 0.5 is also set as the position gain.

Here, as described above, since the first deceleration control pattern is selected as the deceleration control pattern in a situation in which there is a sufficient margin in the remaining distance to the next stop position (S9), it is possible to most smoothly stop the vehicle by changing the "jerk limit section", the "constant deceleration section", and the "position control section" in this order. In the graph illustrated in Fig. 7, a boundary line between the first deceleration control pattern and the second deceleration control pattern indicates a limit of the combination of the trajectory correction vehicle speed and the trajectory correction remaining distance at which the vehicle can be stopped at the stop position even when the jerk value and the deceleration are limited.

In contrast, since the second deceleration control pattern is selected as the deceleration control pattern in a situation in which there is not enough margin in the remaining distance to the stop position (S11), the vehicle is stopped by changing the "constant deceleration section" and the "position control section" in this order to reduce at least the impact during the stopping. In the graph illustrated in Fig. 7, a boundary line between the second deceleration control pattern and the third deceleration control pattern indicates a limit of the combination of the trajectory correction vehicle speed and the trajectory correction remaining distance at which the vehicle can be stopped at the stop position even when the position gain is limited.

Since the third deceleration control pattern is selected as the deceleration control pattern in a situation in which there is a smallest margin in the remaining distance to the stop position (S12), the control is performed to stop the vehicle at least at the stop position only in the "position control section".

That is, in the present embodiment, by appropriately changing the deceleration control pattern depending on a degree of margin in the remaining distance to the next stop position, it is possible to implement smooth stop control without imposing a burden on the occupant as much as possible after stopping the vehicle at the stop position. In particular, regarding the jerk value, even in a situation in which there is no margin in the remaining distance to the stop position, since at least the jerk value immediately before the stop is controlled to be small, it is possible to prevent the occurrence of the jerky braking during the stop.

Subsequently, in S13, the CPU 31 determines whether the parking of the vehicle is completed. Specifically, it is determined that the parking of the vehicle is completed when the vehicle is located at the target parking position 42 set in the parking space specified in S2 (the corrected parking space when the parking space is corrected) and the shift position of the vehicle is changed to "P".

Then, if it is determined that the parking of the vehicle is completed (YES in S13), the driving assistance processing program is ended. On the other hand, if it is determined that the parking of the vehicle is not completed (NO in S13), the processing returns to S5.

As described above in detail, according to the driving assistance device 1 and the computer program executed by the driving assistance device 1 of the present embodiment, when the parking trajectory needs to be corrected while the vehicle is moving along the generated parking trajectory, the parking trajectory is corrected (S6), when the parking trajectory is corrected, the deceleration control pattern of the vehicle for stopping the vehicle at the next stop position in the corrected parking trajectory is selected from the plurality of patterns based on the remaining distance from the current position of the vehicle to the next stop position in the corrected parking trajectory and the vehicle speed of the vehicle at the time when the parking trajectory is corrected (S8, S10), and a deceleration control is performed on the vehicle according to the selected deceleration control pattern (S9, S11, and S12). The plurality of deceleration control patterns include the first deceleration control pattern in which control is performed by switching the jerk limit section in which the deceleration control is performed by fixing the jerk, which is a change rate of the deceleration, the constant deceleration section in which the deceleration is performed at a constant deceleration, and the position control section in which the vehicle speed is controlled to corresponding to the remaining distance from the current position of the vehicle to the next stop position in this order, the second deceleration control pattern in which control is performed by switching the constant deceleration section and the position control section in this order, and the third deceleration control pattern including only the position control section. Therefore, even when the parking trajectory is corrected, an optimum pattern is selected from the plurality of patterns as the deceleration control pattern of the vehicle for stopping the vehicle at the next stop position in the corrected parking trajectory, and a deceleration control is performed on the vehicle according to the selected deceleration control pattern, thereby enabling the vehicle to be stopped at the next stop position as smoothly as possible. As a result, deterioration of the riding comfort of the occupant is prevented.

The plurality of deceleration control patterns employ different parameters for at least one or more of the jerk, the maximum deceleration, and the position gain used when the deceleration control is performed for each pattern. Therefore, it is possible to adjust the parameter when the deceleration control is performed to an optimal value based on the remaining distance from the current position of the vehicle to the next stop position in the corrected parking trajectory and the vehicle speed of the vehicle at the time when the parking trajectory is corrected. As a result, it is possible to adjust the parameters for stopping the vehicle as smoothly as possible within a range in which the vehicle can be stopped at the next stop position.

In the first deceleration control pattern, the ranges that can be adopted as parameters are set for the jerk, the maximum deceleration, and the position gain. In the second deceleration control pattern, there is no limit on a range that can be adopted for the jerk and the maximum deceleration, and a range than can be adopted as a parameter is set for the position gain. In the third deceleration control pattern, there is no limit on a range that can be adopted for any of the jerk, the maximum deceleration, and the position gain. Therefore, it is possible to adjust the parameters when performing the deceleration control to optimal values for each deceleration control pattern.

It is determined how much margin is available in the deceleration control to the next stop position based on the remaining distance from the current position of the vehicle to the next stop position in the corrected parking trajectory and the vehicle speed of the vehicle at the time when the parking trajectory is corrected, and the deceleration control pattern is selected based on the determination result. Among the first deceleration control pattern, the second deceleration control pattern, and the third deceleration control pattern, the first deceleration control pattern is selected in a state in which it is determined that there is largest margin, and the third deceleration control pattern is selected in a state in which it is determined that there is the smallest margin (S8, S10). Therefore, in a situation in which there is a sufficient margin in the remaining distance to the stop position, it is possible to most smoothly stop the vehicle by changing the jerk limit section, the constant deceleration section, and the position control section in this order. In contrast, in a situation in which there is not enough margin in the remaining distance to the stop position, it is possible to stop the vehicle to reduce at least the impact at the time of stop by changing the constant deceleration section and the position control section in this order. Then, in a situation in which the remaining distance to the stop position has the smallest margin, it is possible to perform control for stopping the vehicle at least at the stop position only in the position control section.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the present embodiment, the driving assistance processing program illustrated in Fig. 3 is executed in a state in which parking assistance is performed, but may be executed while traveling by autonomous driving assistance other than parking assistance, for example, traveling by autonomous driving assistance for traveling on a general road or in a parking lot at a constant speed is performed. Even while traveling by autonomous driving assistance other than parking assistance is performed, for example, it may be necessary to perform a stop control when an obstacle in front of the vehicle is detected, and in such a case, the travel trajectory generated in advance is corrected. Then, in S7 and subsequent steps, when it is necessary to perform such a stop control, the stop control to the stop position is performed by selecting the deceleration control pattern based on the remaining distance to a newly generated stop position and the current vehicle speed.

In the present embodiment, the jerk, the maximum deceleration, and the position gain are set as the parameters to be changed among the first deceleration control pattern, the second deceleration control pattern, and the third deceleration control pattern, but the parameters to be changed need not be all of them and may be only a part of them. Alternatively, parameters other than the jerk, the maximum deceleration, and the position gain may be changed. There are three types of deceleration control patterns, and there may be two types or four or more types.

In the present embodiment, the processing of the driving assistance processing program (Fig. 3) is executed by the driving assistance ECU 10 of the driving assistance device 1, and an execution entity can be changed appropriately. For example, a control unit of the liquid crystal display 4, a vehicle control ECU, a control unit of a navigation device, and other in-vehicle devices may execute the processing.

## Claims

1. A driving assistance device (1) comprising:
a travel trajectory generation unit (10) configured to generate a travel trajectory (44, 45) of a vehicle (2);
a travel trajectory correction unit (10) configured to correct the travel trajectory when the travel trajectory needs to be corrected while the vehicle is moving along the travel trajectory;
a control pattern selection unit (10) configured to select, when the travel trajectory is corrected, a deceleration control pattern of the vehicle for stopping the vehicle at a next stop position in the corrected travel trajectory from a plurality of patterns, based on a remaining distance from a current position of the vehicle to the next stop position in the corrected travel trajectory and a vehicle speed of the vehicle at a time when the travel trajectory is corrected; and
a vehicle control unit (10) configured to perform a deceleration control on the vehicle according to the selected deceleration control pattern, wherein
a plurality of the deceleration control patterns include
a first deceleration control pattern in which control is performed by switching a jerk limit section in which a deceleration control is performed by fixing a jerk, which is a change rate of deceleration, a constant deceleration section in which deceleration is performed at a constant deceleration, and a position control section in which the vehicle speed is controlled to correspond to the remaining distance from the current position of the vehicle to the next stop position in this order,
a second deceleration control pattern in which control is performed by switching the constant deceleration section and the position control section in this order, and
a third deceleration control pattern including only the position control section.

2. The driving assistance device according to claim 1, wherein
in the plurality of deceleration control patterns, different parameters are employed for each of at least one or more of a jerk, a maximum deceleration, and a position gain used when the deceleration control is performed for each pattern.

3. The driving assistance device according to claim 2, wherein
in the first deceleration control pattern, a range that is adoptable as a parameter is set for each of the jerk, the maximum deceleration, and the position gain,
in the second deceleration control pattern, there is no limit on a range for the jerk and the maximum deceleration, and a range that is adoptable as a parameter is set for the position gain, and
in the third deceleration control pattern, there is no limit on a range that is adoptable for any of the jerk, the maximum deceleration, and the position gain.

4. The driving assistance device according to any one of claims 1 to 3, wherein
the control pattern selection unit
determines how much margin is available in the deceleration control to the next stop position based on the remaining distance from the current position of the vehicle to the next stop position in the corrected travel trajectory and the vehicle speed of the vehicle at the time when the travel trajectory is corrected, and
selects the deceleration control pattern based on a determination result, and
among the first deceleration control pattern, the second deceleration control pattern, and the third deceleration control pattern, the first deceleration control pattern is selected in a state in which it is determined that there is a largest margin, and the third deceleration control pattern is selected in a state in which it is determined that there is a smallest margin.
